# EUROPÄISCHE PATENTSCHRIFT

(11) **EP 2 504 196 B1**
(45) Veröffentlichungstag und Bekanntmachung des Hinweises auf die Patenterteilung: **15.05.2019**
(21) Anmeldenummer: 10795213.7
(22) Anmeldetag: 27.11.2010
(51) Int. Cl.: B60N 2/02, B60N 2/888, B60N 2/90, B60R 21/0134, B60R 21/01, B60Q 9/00, G08G 1/16

(54) **VERFAHREN UND VORRICHTUNG ZUR VERMEIDUNG ODER VERRINGERUNG DES VERLETZUNGSRISIKOS FÜR FAHRZEUGINSASSEN BEI EINEM AUFFAHRUNFALL**
METHOD AND DEVICE TO PREVENTING OR REDUCING THE RISK OF INJURY FOR VEHICLE PASSENGERS DURING AN ACCIDENT
PROCÉDÉ ET DISPOSITIF POUR LA PRÉVENTION OU LA RÉDUCTION DU RISQUE DE SE BLESSER POUR LES OCCUPANTS D'UN VÉHICULE EN CAS DE COLLISION

(30) Priorität: 27.11.2009 DE 102009055956
(43) Veröffentlichungstag der Anmeldung: 03.10.2012
(73) Patentinhaber: Hochschule Kaiserslautern University of Applied Sciences, 66482 Zweibrücken (DE); Universität des Saarlandes, 66123 Saarbrücken (DE); Hochschule Fresenius, 65510 Idstein (DE)
(72) Erfinder: KRICK, Christoph, 66424 Homburg (DE); ENGELMANN, Erik, 66484 Kleinsteinhausen (DE); GÄNG, Lutz-Achim, 74081 Heilbronn (DE); KLEIN, Frank, 66793 Reisbach (DE); NEU, Christian, 66793 Reisbach (DE); FELDER, Hanno, 66123 Saarbrücken (DE); MEYER, Stefan, 66453 Gersheim (DE); MÜNCH, Peter, FR-57620 Goetzenbruck (FR)
(74) Vertreter: Patentanwälte Dr. Keller, Schwertfeger Partnerschaft mbB
(86) Internationale Anmeldenummer: PCT/EP2010/007198
(87) Internationale Veröffentlichungsnummer: WO 2011/063981

(56) Entgegenhaltungen:
- DE-A1-102004 004 546

## Beschreibung

### Technisches Gebiet

Die vorliegende Erfindung betrifft ein Verfahren zur Vermeidung des Verletzungsrisikos für Fahrzeuginsassen bei einem Auffahrunfall gemäß dem unabhängigen Patentanspruch 1 sowie eine Vorrichtung zur Durchführung des Verfahrens gemäß dem unabhängigen Patentanspruch 7.

Um bei einem Unfall das Verletzungsrisiko für die Fahrzeuginsassen so gering wie möglich zu halten, sind Kraftfahrzeuge in der Regel mit mehreren Sicherheitssystemen auszurüsten. Zu solchen Sicherheitssystemen gehören u.a. Kopfstützen, Sicherheitsgurte, Gurtstraffer, Airbags und dergleichen. Daneben sind auch Sicherheitssysteme bekannt, die im Vorfeld eines Unfalls aktiv werden, mit dem Ziel das Unfallereignis möglichst zu vermeiden. Solche Fahrassistenzsysteme, wie zum Beispiel elektronische Stabilitätsprogramme (ESP) oder adaptive cruise controle Systeme (ACC), erkennen unfallträchtige Situationen auf Basis ständig gewonnener Messwerte und leiten ohne Zutun des Fahrzeugführers geeignete Maßnahmen zur Vermeidung eines Unfalls ein.

Eine besondere Unfallart stellt der Auffahrunfall dar, bei dem ein Fahrzeug von hinten auf ein stehendes oder vorausfahrendes Fahrzeug auffährt. Bei solchen Unfällen, bei denen die Fahrzeuginsassen einer plötzlichen starken Beschleunigung in Fahrtrichtung ausgesetzt sind, hat sich gezeigt, dass trotz der genannten Sicherheitssysteme, die Insassen häufig ein Schleudertrauma erleiden. Der Grund hierfür liegt darin, dass es in der Regel zusätzlich zur bekannten Whiplashbewegung (Extension und anschließende Flexion der HWS) auch zu einem Taumeln des Kopfes kommt bei welchem die wirbelnahe Kopfausrichtende Muskulatur überdehnt und somit geschädigt werden kann. Dieses Taumeln tritt umso intensiver ein je mehr der Kopf beim Aufprall von der Medianebene abweicht. Die vom Taumeln hervorgerufene Muskelüberdehnung der wirbelnahen Nackenmuskulatur ist nach dem aktuellen Kenntnisstand hauptverantwortlich für das Beschwerdebild bei einem Schleudertrauma. Da die Fahrzeuginsassen im Regelfall das rückwärtige Verkehrsgeschehen nicht beobachten, trifft sie der Auffahrunfall unvorbereitet. Die Nackenmuskulatur ist daher relativ entspannt, so dass der mit dem Unfall auferzwungenen Kopfbewegung zumindest anfänglich kein Widerstand entgegengebracht werden kann. Das Ausmaß der Kopfbewegung ist daher groß, was eine Überdehnung der Muskulatur zusätzlich begünstigt.

### Stand der Technik

Es sind Lösungen bekannt, wonach durch eine Vorrichtung zur Heranführung der Kopfstütze an den Kopf einer Person deren Verletzungsgefahr im Kopf- und Nackenbereich gemindert werden soll (EP 1 369 310 A1). Damit wird jedoch nur die Masse des Kopfes linear abgestützt, eine körpereigene und damit vorteilhafte Abstützung des Kopfes gegenüber dem Oberkörper zur Vermeidung oder Reduzierung des Taumelns wird dadurch jedoch nicht erreicht.

In einer Reihe bekannter Lösungen (DE 102 12 985 A1, DE 10 2004 004 546 A1, WO 2006/072342 A1) werden aus sensorisch erfassten Abstandsdaten rechnerisch Gefahrensituationen erkannt und hieraus zu bestimmten Zeitpunkten warnende Signale und Systemeingriffe generiert. Die optischen, akustischen oder haptischen Warn-, Reiz- oder Schrecksignale dienen der Erhöhung der Aufmerksamkeit des Menschen in Gefahrensituationen, ermöglichen jedoch nicht die gezielte Ausrichtung und muskuläre Stützung bestimmter Körperbereiche von Fahrzeuginsassen im spezifischen Fall eines drohenden Heckaufpralls.

Diese Problematik soll durch Maßnahmen gelöst werden, bei denen mittels akustischer oder optischer oder taktiler oder im Besonderen elektrischer, bestimmte Körperbereiche eines Fahrzeuginsassen stimulierender Signale eine stützende Muskelanspannung in Gefahrensituationen erzielt werden soll (DE 602 07 304 T2, EP 2 196 360 A1). Diese Lösungen (Vorrichtungen oder Systeme) berücksichtigen jedoch nicht, dass insbesondere im Falle eines heckseitigen Aufpralls eines auffahrenden Fahrzeugs bei einer Kopfstellung außerhalb der Medianebene des Körpers die stützende Wirkung der Hals- und Nackenmuskulatur und die Vermeidung gefährlicher Taumelbewegungen des Kopfes nur unzureichend ist und Verletzungen, insbesondere Schleudertraumata, nicht oder nicht hinreichend vermieden werden können.

### Darstellung der Erfindung

Es ist daher die Aufgabe der Erfindung, die Nachteile der genannten Lösungen zu überwinden und eine Möglichkeit zu bieten, mit der eine wirksame muskuläre Stützung der Halswirbelsäule und die Vermeidung der gefährlichen Taumelbewegung des Kopfes von Fahrzeuginsassen im Fall eines Heckaufpralls erzielt werden kann.

Diese Aufgabe wird durch ein Verfahren mit den Merkmalen des Patentanspruchs 1 sowie eine Vorrichtung mit den Merkmalen des Patentanspruchs 7 gelöst.

Vorteilhafte Ausführungsformen und Weiterbildungen werden mit den Unteransprüchen 2 bis 6 und 8 beansprucht.

Der Grundgedanke der Erfindung besteht darin, die Fahrzeuginsassen durch geeignete Maßnahmen auf einen bevorstehenden Auffahrunfall vorzubereiten, so dass körpereigene Kräfte den unfallbedingten Beschleunigungskräften entgegenwirken können. Das Ausmaß der Kopfbewegungen während des Unfalls wird dadurch verringert mit der Folge, dass Verletzungen weniger häufig auftreten, zumindest jedoch weniger schwer sind.

Die Schwierigkeit hierbei liegt in der kurzen zur Verfügung stehenden Zeit zwischen dem Erkennen einer unausweichlich zu einem Unfall führenden Verkehrssituation und dem tatsächlichen Unfallereignis, was eine bewusste Ausführung geeigneter Verhaltensmuster zur Minimierung des Verletzungsrisikos verhindert. Dieses Problem löst die Erfindung durch Hervorrufen eines Schreckreflexes bei den Insassen, also einer reflexartigen Reaktion auf einen exterozeptiven Reiz, wobei die reflexartige Reaktion gleichzeitig eine Vorbereitungshandlung auf den bevorstehenden Unfall darstellt. Ein unerwartet wahrgenommenes Schrecksignal als äußerer Reiz führt bei den Fahrzeuginsassen nach Durchlaufen einer insassentypischen Reaktionszeit unwillkürlich zu einem Schreckreflex, mit dem eine unwillkürliche und plötzliche Muskelkontraktion, insbesondere Kontraktion der Nackenmuskulatur, einhergeht. Diese Muskelkontraktion hält über eine gewisse Zeitspanne, die Reaktionsdauer, an. Bei entsprechender Terminierung des Zeitpunkts für die Emission des Schrecksignals kann so erreicht werden, dass sich die Nackenmuskulatur zum Zeitpunkt des Aufpralls in einem angespannten Zustand befindet, wodurch die das Schleudertrauma auslösende Überdehnung von Anfang an verringert, bestenfalls ganz verhindert wird.

Um auch Unfallsituationen berücksichtigen zu können, bei denen die Kopfstellung der Fahrzeuginsassen gegenüber der Medianebene des Körpers eines Insassen bzw. aus der Fahrtrichtung des Fahrzeugs verschwenkt ist und daher ein erhöhtes Verletzungsrisiko in sich birgt, ist gemäß der Erfindung vorgesehen, dass vor der Ausgabe eines die Muskulatur im Hals- und Nackenbereich eines Fahrzeug-Insassen stimulierenden Schrecksignals eine Orientierungsreaktion des Fahrzeuginsassen durch ein statisches oder dynamisches optisches Signal an festgelegter oder rechnerisch bestimmbarer Stelle vor dem Insassen hervorgerufen wird, die zu einer Ausrichtung des Kopfs zumindest annähernd in der Medianebene bzw. der Fahrtrichtung führt. Das optische Signal ist dabei so gestaltet und positioniert, dass der Blick im Zuge der Orientierungsreaktion des Kopfes auf dieses Signal gerichtet wird. Im Falle einer normalen, das heißt in Fahrtrichtung weisenden, Sitzposition eines Insassen schneidet die Medianebene mittig den Bereich vor dem Insassen in Form einer gedachten vertikalen Linie. Beim Fahrer zum Beispiel schneidet diese Linie typischerweise mittig die Lenkradmitte. Im Bereich um diese Linie ist dann die Position des optischen Signals vorgesehen. Entspricht die Sitzposition des Fahrzeuginsassen nicht der Normalposition, so ist eine rechnerisch bestimmbare, von dem Linienbereich abweichende Positionierung des optischen Signals möglich. Ein optisches Signal ist im Gegensatz zu akustischen oder taktilen Signalen besonders geeignet, für jeden einzelnen Fahrzeuginsassen eine individuelle Kopfausrichtung zu bewirken.

Das die Orientierungsreaktion hervorrufende optische Signal wird bevorzugterweise von einem Head-up Display erzeugt, mit dem Vorteil, dass innerhalb des von dem Display vorgegebenen Felds das optische Signal an vorbestimmter oder rechnerisch ermittelter Stelle ausgegeben werden kann. Auch ist es auf einfache Weise möglich optische Signale unterschiedlichster Art zu erzeugen, zum Beispiel Signale von so hoher Lichtintensität und/oder Dynamik oder die Gefahr verdeutlichender bildhafter Symbolik und/oder ein reales oder virtuelles Bild oder Bildsequenz, beispielsweise eines von hinten auffahrenden Fahrzeugs, so dass die Aufmerksamkeit des Insassen durch Ausrichten seines Kopfes erfolgt und nicht nur durch Ausrichten der Pupillen. Im regulären Fahrbetrieb kann das Head-up Display zur Darstellung von informativen Inhalten, wie zum Beispiel Navigations- und Fahrzeugdaten und dergleichen, verwendet werden.

Mit diesen Maßnahmen wird verhindert, dass eine Überdehnung der Muskulatur infolge einer während des Aufpralls zur Seite gedrehten Position des Kopfes, die durch den unfallbedingten Beschleunigungsimpuls weiter ausgedehnt würde, zusätzlich verstärkt wird. Dieser Effekt hat seinen Ursprung in der Exzentrizität von Kopfschwerpunkt und der durch die Halswirbel vorgegebenen vertikalen Drehachse des Kopfes. Mit zunehmender seitlicher Kopfstellung vergrößert sich das Maß der Exzentrizität, so dass der Beschleunigungsimpuls durch den vergrößerten Hebelarm ein höheres Verletzungspotential besitzt. Durch die erfindungsgemäße Ausrichtung des Kopfes vor dem Aufprall zumindest annähernd in die Medianebene hinein werden also die eine Drehbewegung des Kopfes unterstützenden Drehmomente minimiert.

### Kurze Beschreibung der Erfindung

Die Erfindung wird nachstehend anhand eines in der Zeichnung dargestellten Ausführungsbeispiels näher erläutert. Das Ausführungsbeispiel gibt eine besonders vorteilhafte Umsetzung der Erfindung wieder, ohne sich darauf einzuschränken. Vielmehr liegen auch solche Ausführungsformen im Rahmen der Erfindung, die sich dem Fachmann ohne weiteres erschließen. Des leichteren Verständnisses wegen werden für gleiche oder gleichwirkende Mittel unterschiedlicher Figuren soweit möglich gleiche Bezugszeichen verwendet.

Es zeigen
- Fig. 1: den zeitlichen Ablauf eines erfindungsgemäßen Verfahrens bis zur Auslösung des Schrecksignals,
- Fig. 2: die Ermittlung des Emissionszeitpunkts t_{E} für das Schrecksignal und des Emissionszeitpunkts t_{O} für das optische Signal anhand eines Zeitstrahls,
- Fig. 3: eine Seitenansicht auf ein Kraftfahrzeug mit schematischer Darstellung einer Vorrichtung zur Durchführung des Verfahrens,
- Fig. 4a: eine Innenansicht auf ein mit einer erfindungsgemäßen Vorrichtung ausgerüstetes Kraftfahrzeug mit Blick in Fahrtrichtung,
- Fig. 4b: das in Fig. 4a dargestellte Fahrzeug mit Blickrichtung von der Seite,
- Fig. 4c: das in Fig. 4a dargestellte Fahrzeug mit Blickrichtung von hinten.
- Fig. 5a: eine Vorderansicht auf ein Fahrzeug vor Emission des optischen Signals,
- Fig. 5b: eine Vorderansicht auf ein Fahrzeug nach Emission des optischen Signals und vor Emission des Schrecksignals, und
- Fig. 5c: eine Vorderansicht auf ein Fahrzeug nach Emission des Schrecksignals,

### Wege zur Ausführung der Erfindung und gewerbliche Verwertbarkeit

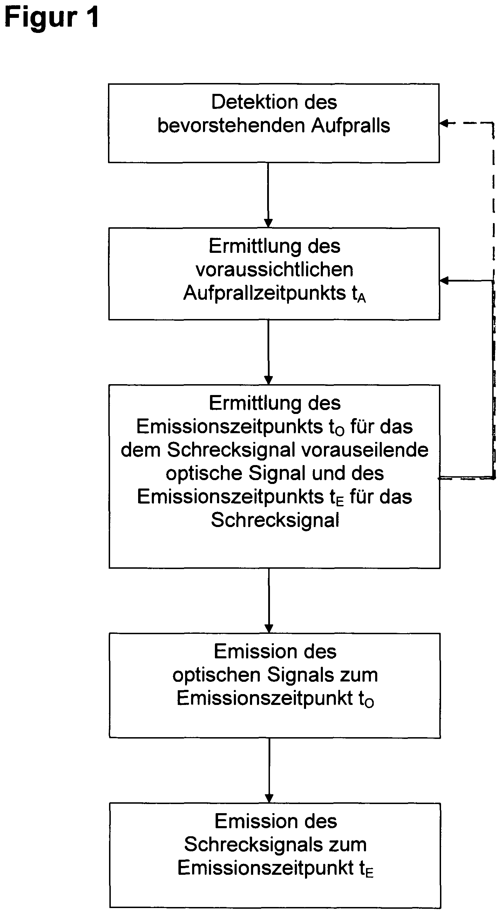

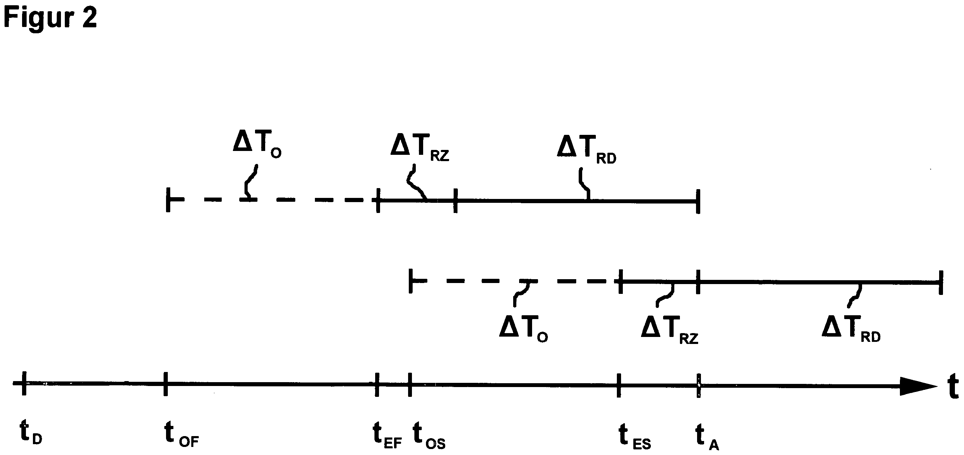

Die Figuren 1 und 2 zeigt die wesentlichen Verfahrensschritte des erfindungsgemäßen Verfahrens anhand eines Flussdiagramms und eines Zeitstrahls. Das erfindungsgemäße Verfahren beginnt mit der Detektion eines bevorstehenden Unfallereignisses, d.h. einer Situation, die unausweichlich oder mit hoher Wahrscheinlichkeit zu einem Auffahrunfall führt. Ein Auffahrunfall ist rechnerisch dann gegeben, wenn sich die Aufenthaltsorte zweier Fahrzeuge 1, 5 zum gleichen Zeitpunkt überschneiden.

Für einen Auffahrunfall ist ein lineares Unfallgeschehen charakteristisch, d.h. zwei an einem Unfall beteiligte Fahrzeuge 1, 5 bewegen sich aufgrund des Straßenverlaufs entlang einer Linie. Die Detektion des Unfalls kann in diesem Fall abgeleitet werden aus dem räumlichen und/oder zeitlichen Abstand der beiden Fahrzeuge 1, 5 voneinander sowie dem zeitlichen Verlauf der Abstandsänderung. Zusätzlich kann auch der Annäherungswinkel erfasst werden, der dem Winkel zwischen den Fahrtrichtungen der sich annähernden Fahrzeuge 1, 5 entspricht und somit den Aufprallwinkel definiert. Die Abstandsänderung innerhalb eines bestimmten Zeitintervalls definiert die Annäherungsgeschwindigkeit, aus der wiederum in Verbindung mit dem zugehörigen Fahrzeugabstand auf die Wahrscheinlichkeit für den Eintritt des Auffahrunfalls rückgeschlossen werden kann.

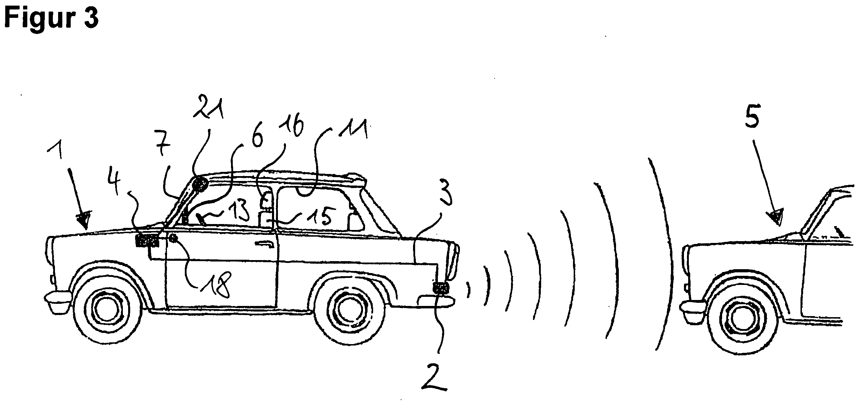

Figur 3 zeigt in schematischer Darstellung die Integration einer zu diesem Verfahrensschritt geeigneten Vorrichtung in ein Fahrzeug 1. Die Vorrichtung umfasst einen Sensor 2 am Heck des Fahrzeugs 1. Der Sensor 2 kann beispielsweise von einem Radar, Ultraschallsensor, Laser, Laserscanner oder einer Videokamera gebildet sein. Der Sensor 2 überwacht ständig den rückwärtigen Bereich des Fahrzeugs 1 und liefert mit jedem Messzyklus Messwerte über die Datenleitung 3 zu einer Steuereinheit 4. Die Messwerte bestehen beispielsweise aus dem räumlichen Abstand des Fahrzeugs 1 zu einem weiteren Fahrzeug 5 zu einem bestimmten Zeitpunkt, gegebenenfalls auch aus dem zugehörigen Annäherungswinkel. Unter Berücksichtigung der momentanen Fahrzeuggeschwindigkeit kann der räumliche Abstand auch sofort in einen zeitlichen Abstand umgerechnet werden. Aus einer Vielzahl solcher Datensätze kann dann die Annäherungsgeschwindigkeit bestimmt werden. Falls die Annäherungsgeschwindigkeit bei einem bestimmten Abstand zu hoch ist um durch Bremsen einen Unfall verhindern zu können, so ist ein bevorstehender Auffahrunfall detektiert. Der Zeitpunkt der Detektion ist in Figur 2 mit t_{D} bezeichnet.

In einem nächsten Schritt wird auf Basis der vorhandenen Messwerte in der Steuereinheit 4 der voraussichtliche Zeitpunkt t_{A} für den Aufprall ermittelt. So kann z.B. aus dem räumlichen Abstand und der Annäherungsgeschwindigkeit der beiden Fahrzeuge 1, 5 das Zeitintervall berechnet werden, nach dem der räumliche Abstand den Wert Null annimmt. Falls die Messwerte bereits in einen zeitlichen Abstand umgerechnet sind, kann auch durch Extrapolation des Verlaufs des zeitlichen Abstands auf den Aufprallzeitpunkt t_{A} geschlossen werden, bei dem der zeitliche Abstand Null beträgt.

Ausgehend vom voraussichtlichen Aufprallzeitpunkt t_{A} wird dann der Zeitpunkt t_{E} bzw. das Zeitfenster für die Emission des Schrecksignals und der davon abhängige Zeitpunkt t_{O} für die Emission des optischen Signals 8 ermittelt. Dabei wird die Reaktionszeit ΔT_{RZ} der Fahrzeuginsassen 17 vom Emissionszeitpunkt t_{E} des Schrecksignals bis zum Einsetzen des Schreckreflexes sowie die Dauer des Schreckreflexes ΔT_{RD} berücksichtigt. Die Reaktionszeit ΔT_{RZ} ist von Mensch zu Mensch verschieden und liegt in einem Bereich von etwa 50 ms bis 200 ms, bei schneller reagierenden Menschen zwischen 50 ms und 100 ms. Für den frühesten Emissionszeitpunkt t_{EF} werden dazu die Reaktionszeit ΔT_{RZ} und die Reaktionsdauer ΔT_{RD} vom Aufprallzeitpunkt t_{A} abgezogen. Für den spätesten Emissionszeitpunkt t_{ES} hingegen wird lediglich der um die Reaktionszeit ΔT_{RZ} verminderte Zeitpunkt errechnet. Der früheste Emissionszeitpunkt t_{EF} und späteste Emissionszeitpunkt t_{ES} für das Schrecksignal definieren auf diese Weise ein Zeitfenster, in dem die Emission des Schrecksignals stattfinden muss, um die erwünschte Wirkung erzielen zu können. Für die erfindungsgemäße Wirkung genügt es, einen Emissionszeitpunkt t_{E} zwischen dem frühest- und spätestmöglichen Emissionszeitpunkt zu ermitteln. Die zeitlichen Zusammenhänge sind in Figur 2 dargestellt, wobei die Darstellungsart jedoch nicht maßstäblich zu verstehen, insbesondere lassen sich aus Figur 2 keine konkreten Zeitangaben entnehmen.

Die Emission des optischen Signals 8 zum Bewirken einer Orientierungsreaktion, in deren Folge ein Ausrichten des Kopfes 19 in die Medianebene oder Fahrtrichtung hinein erfolgt, geht dem Schrecksignal in dem für die Orientierungsreaktion notwendigen zeitlichen Abstand Δ T_{O} voraus und dauert vorzugsweise bis zur Emission des Schrecksignals an, damit der Fahrzeuginsasse 17 in der eingenommenen Sitzposition bleibt. Optional kann vor oder zu Beginn des optischen Signals 8 ein akustisches oder haptisches Signal erzeugt werden, das den Fahrzeuginsassen 17 dazu veranlasst, sich dem optischen Signal 8 zuzuwenden.

Die Durchführung dieser Verfahrensschritte, nämlich Ermittlung des voraussichtlichen Aufprallzeitpunkts t_{A} sowie Ermittlung des Emissionszeitpunkts t_{E} für das Schrecksignal und des Emissionszeitpunkts t_{O} für das optische Signal 8, erfolgt in kontinuierlich aufeinanderfolgenden Zyklen bis der aktuelle Messzeitpunkt mit dem Emissionszeitpunkt t_{O} für das optische Signal 8 zusammenfällt, wodurch eine iterative Annäherung an den Emissionszeitpunkt t_{O} erfolgt. Es ist auch möglich den Verfahrensschritt der Detektion des bevorstehenden Unfallereignisses in diese Messzyklen zu integrieren, was in Figur 1 durch die gestrichelte Linie angedeutet ist.

Im nächsten Verfahrenschritt wird über die Steuereinheit 4 zum Emissionszeitpunkt t_{O} die Emission des optischen Signals 8 veranlasst. In einer vorgeschlagenen Ausführung der erfindungsgemäßen Vorrichtung werden dazu die Zeitdaten aus dem Datenverarbeitungssystem zur zeitlichen Vorhersage des Auffahrvorgangs und des bevorstehenden rückwärtigen Aufpralls einer Steuereinheit 4 zugeleitet, mit welcher der Aktivierungszeitpunkt der die Kopfausrichtung bewirkenden Mittel errechnet und deren Auslösung vorgenommen wird.

Im erfindungsgemäßen Verfahren erfolgt die Ausrichtung des Kopfs 19 eines Insassen 17 durch eine Orientierungsreaktion, die durch ein statisches oder dynamisches optisches Signal 8 an festgelegter oder rechnerisch bestimmbarer Stelle vor dem Insassen 17 bewirkt wird. In einer bevorzugten Ausprägung der Erfindung ist das den Kopf 19 ausrichtende optische Signal 8 von so hoher Lichtintensität und Dynamik, oder die Gefahr verdeutlichender bildhafter Symbolik, oder ein Realbild des von hinten aufzufahren drohenden Fahrzeugs 5, dass der Insasse 17 die Gefahr unweigerlich wahrnimmt und er seinen Blick durch Ausrichten des Kopfes 19 in Richtung der Position des optischen Signals 8 wendet und nicht nur seine Pupillen ohne Kopfbewegung ausrichtet.

In einer erfindungsgemäßen Vorrichtung wird hierzu als das die Orientierungsreaktion des Kopfes 19 eines Insassen 17 bewirkende optische Signal 8 im Falle des Fahrers oder Beifahrers eine zeilen- oder matrixartige Anordnung von Lichtemittern im Bereich des Armaturenbretts 12 oder ein Head-up Display 6, für andere Insassen eine zeilen- oder matrixartige Anordnung von Lichtemittern oder ein Display an der Rückseite der vor einem Insassen befindlichen Rücklehne 15 oder Kopfstütze 16 oder im Deckenbereich 11 schräg vor einem Insassen vorgeschlagen. In einer beispielhaften Ausführung der Erfindung wird zur Bewirkung der Orientierungsreaktion des Insassen 17 zur Ausrichtung seines Kopfes 19 ein dynamisches optisches Signal 8 vorgeschlagen, das einmalig oder mehrmalig, insbesondere intervallartig, pulsende Lichtemissionen in Form eines oder mehrerer Lichtfelder, eines vorzugsweise symmetrisch auf einen Zielpunkt hin laufenden Lauflichtes oder in Form von Symbolen oder Bildern ausgibt.

Erfindungsgemäß besteht bei einem aus mehreren Lichtemittern zeilenartig aufgebauten optischen Signal 8 die Möglichkeit, die durch die Orientierungsreaktion optimale Ausrichtung des Kopfes 19 durch die, insbesondere von der Sitzposition des Insassen 17 abhängige, Aktivierung der günstigsten Stelle der Lichtemission in einer, vorzugsweise horizontaler Dimension, zu erzielen. Bei einer matrixartigen Anordnung von Lichtemittern oder einem Display oder Head-up Display 6 kann die Ausgabestelle des optischen Signals 8 in zwei Dimensionen variiert werden. Durch Variation der Ausgabestelle des optischen Signals 8 in zwei Dimensionen sowie durch die Anordnung der Lichtemitter oder Displays im Innenraum des Fahrzeugs 1 kann in einer erfindungsgemäßen Weiterbildung des Verfahrens die Ausgabestelle des optischen Signals 8 so festgelegt oder rechnerisch bestimmt wird, dass der Kopf 19 des Insassen 17 in bestimmter Richtung so ausgerichtet wird, dass der Abstand zur Kopfstütze 16 möglichst klein ist. Auch die Berechnung der Ausgabestelle des optischen Signals 8 erfolgt vorzugsweise in der Steuereinheit 4.

In einer weiterführenden Ausprägung des erfindungsgemäßen Verfahrens wird vor der Ausgabe des den Kopf 19 ausrichtenden optischen Signals 8 die Kopf-Schulterstellung der Insassen 17 mit sensorischen oder bildverarbeitungstechnischen Mitteln 21 erfasst und vermessen, wobei das Messergebnis als Aktivierungsbedingung und zur Bestimmung von Art, Ausgabeort und Ausgabezeit des optischen Signals 8 herangezogen wird. Als sensorische Mittel können zum Beispiel die Oberkörper- sowie Kopfposition und -lage vermessende Abstandssensoren im Fahrzeuginnenraum, als bildverarbeitungstechnische Mittel zum Beispiel Innenraum-Kameras mit angeschlossener Bildauswertungseinheit zur Klassifikation oder Vermessung der Oberkörper- sowie Kopfposition und -lage zum Einsatz kommen. In einer erfindungsgemäßen Vorrichtung hierzu werden die Messdaten aus den sensorischen oder bildverarbeitungstechnischen Mitteln 21 der Steuereinheit 4 zugeleitet und in ihr mit diesen Messdaten die Aktivierungsbedingung für die die Kopfausrichtung bewirkenden Mittel sowie Art und Ausgabeort des den Kopf 19 ausrichtenden optischen Signals 8 ermittelt. Wird durch die sensorischen oder bildverarbeitungstechnischen Mittel 21 eine bereits günstige Kopf-Schulterausrichtung des Insassen 17 festgestellt, so wird erfindungsgemäß das den Kopf 19 ausrichtende optische Signal 8 nicht aktiviert. Auch wenn eine sehr ungünstige Sitzposition des Insassen 17 ermittelt worden ist, so ist vorgesehen, das den Kopf 19 ausrichtende optische Signal 8 und die Schrecksignalausgabe nicht zu aktivieren.

In einer bevorzugten Ausprägung des Verfahrens wird vorgeschlagen, dass während oder bereits vor und während der Ausgabe des den Kopf 19 ausrichtenden optischen Signals 8 die Aufmerksamkeit und oder die Reaktion von Insassen 17 des Fahrzeugs 1 steigernde optische oder akustische Warnsignale oder Sprachhinweise ausgegeben werden. Durch die Ausgabe von optischen oder akustischen Warnsignalen oder Sprachhinweisen kurz vor der Aktivierung des optischen Signals 8 wird die Aufmerksamkeit des oder der Insassen 17 im Fahrzeug 1 bereits in der ersten Ablaufphase gesteigert, um in der dann anschließenden zweiten Phase die Orientierungsreaktion best- und schnellstmöglich ausführen zu können. Im Falle einer Nicht-Aktivierungs-Entscheidung der Steuereinheit 4 für das optische Signal 8 oder das Schrecksignal wegen bereits als günstig erkannter Ausrichtung des Kopfes 19 oder sehr ungünstiger Sitzposition eines Insassen 17, erzeugen die vorgeschlagenen optischen oder akustischen Warnsignale oder Sprachhinweise eine zeitlich abgestimmte Vorstimulation der Insassen17 vor der Schrecksignalausgabe oder bewirken die kurzfristige Änderung der Sitzposition.

In einem letzten Verfahrensschritt wird über die Steuereinheit 4 die Emission des Schrecksignals durch Aktivierung einer Signalquelle 18 bewirkt. Das Schrecksignal kann vielfältiger Natur sein und beispielsweise aus einem akustischen, visuellen und/oder taktilen Reiz bestehen. Andere Reize wie z.B. olfaktorische Reize sind von der Erfindung nicht ausgeschlossen, sofern sie in der Lage sind, einen Schreckreflex bei den Fahrzeuginsassen zu erzeugen. Der Schreckreflex bewirkt, wie bereits beschrieben, eine Kontraktion u.a. der Nackenmuskulatur, so dass der Kopf 19 während des Aufpralls aktiv vom Fahrzeuginsassen 17 gehalten und dadurch eine übermäßige verletzungsträchtige Kopfbewegung verhindert wird.

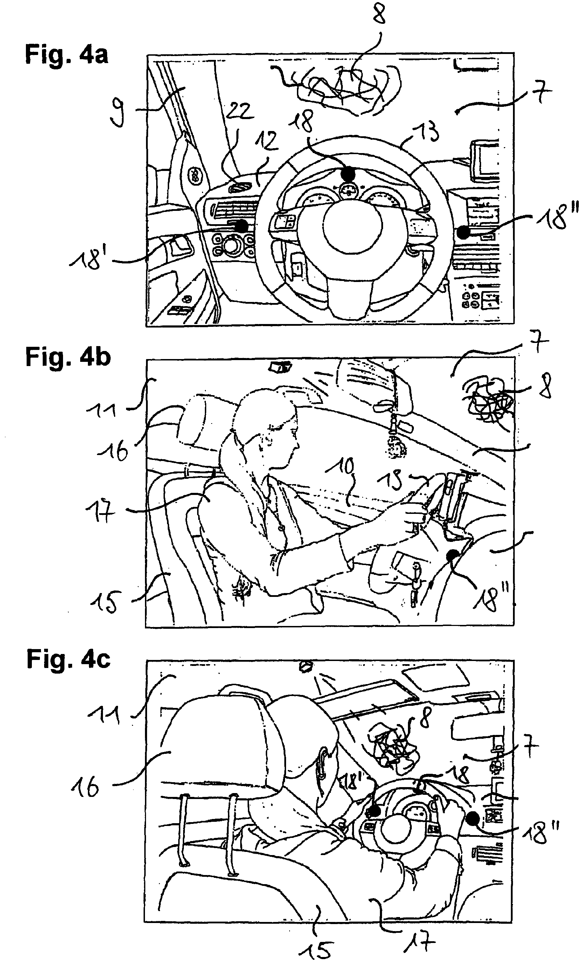

Die Figuren 3, 4a bis c und a bis c zeigen verschiedene Signalquellen und deren mögliche Anordnungen innerhalb eines Fahrzeugs 1. Für ein Funktionieren der Erfindung ist es jedoch nicht notwendig, alle dargestellten Signalquellen in einem Fahrzeug 1 vorzusehen. Vielmehr kann schon eine einzige Signalquelle ausreichen, um die erfindungsgemäße Wirkung zu erzielen. Das schließt nicht aus, dass zur Verstärkung des Schrecksignals oder zur Erzielung einer bestimmten Wirkung mehrere Signalquellen, gegebenenfalls unterschiedlicher Natur, auch kumulativ zur Anwendung kommen.

Die in den Figuren 3 bis 5c dargestellten Fahrzeuge 1 besitzen jeweils ein Head-up Display 6, das zunächst zur Erzeugung des die Orientierungsreaktion bewirkenden optischen Signals 8 dient. Zusätzlich kann das Head-up Display 6 dazu genutzt werden, allein oder in Kombination mit einem akustischen Signal das Schrecksignal zu erzeugen. Die dabei auf die Windschutzscheibe 7 projizierten optischen Effekte erzeugen den erwünschten Schreckreflex.

Die Figuren 4a bis c stellen den Innenraum eines mit einer erfindungsgemäßen Vorrichtung ausgestatteten Fahrzeugs 1 teilweise dar. Man sieht die den Innenraum begrenzende Windschutzscheibe 7, Teile der Karosserie 9 und Türen 10 sowie den Fahrzeughimmel 11. Entlang des unteren Randes der Windschutzscheibe 7 erstreckt sich ein Armaturenbrett 12 aus dem im Fahrerbereich ein Lenkrad 13 ragt. Ferner sieht man einen Fahrzeugsitz 14 mit Rückenlehne 15 und Kopfstütze 16, auf dem ein Fahrzeuginsasse 17 Platz genommen hat.

Wie aus den Figuren 4 a bis c ersichtlich, sind erste Signalquellen 18 im Bereich des Armaturenbretts 12 angeordnet, die ein optisches und/oder akustisches Schrecksignal erzeugen. Optische Schrecksignale können von einem Blitzlicht oder Dauerlicht, gegebenenfalls farbiger Natur, gebildet sein. Akustische Schrecksignale, beispielsweise in Form eines oder mehrere Knalle oder einer Sirene, können von Lautsprechern 22 emittiert werden, wozu beispielsweise die in den meisten Fahrzeugen 1 vorhandenen Radiolautsprecher dienen können.

Im Rahmen der Erfindung liegt es auch, mit den optischen Signalquellen 18 zur Erzeugung des Schrecksignals das dem Schrecksignal zeitlich vorgelagerte optische Signal 8 zu bewirken. Auch können die genannten akustischen Signalquellen 18 das das optische Signal zur Erzeugung einer Orientierungsreaktion einleitende akustische Signal, beispielsweise einen Gong oder eine Sprachausgabe, wiedergeben. Bevorzugt ist dabei eine Signalquelle 18 im Bereich des Ausgabeorts des optischen Signals 8, was die Orientierungsreaktion unterstützt.

Gemäß einer ersten Ausführungsform der Erfindung ist lediglich eine einzige Signalquelle im Armaturenbrett 12 in Fahrtrichtung vor dem Fahrzeuginsassen 17 angeordnet, die durch Aussendung eines Schrecksignals zunächst den bereits beschriebenen Schreckreflex beim Fahrzeuginsassen 17 initiiert.

Eine andere Möglichkeit der Anordnung der Signalquellen besteht gemäß einer zweiten Ausführungsform der Erfindung darin, zwei oder mehrere akustische und/oder optische Signalquellen 18', 18" im Armaturenbrett 12 vorzusehen und zwar symmetrisch links und rechts des Fahrzeuginsassen 17. Es ist möglich, die beiden Signalquellen 18', 18" simultan zu aktivieren, womit eine der zuvor beschrieben Wirkung vergleichbare Wirkung einsetzt.

Diese Anordnung der Signalquellen 18', 18" eröffnet jedoch zusätzlich die Möglichkeit, die Ausrichtbewegung des Kopfes 19 des Fahrzeuginsassen 17 gezielt zu steuern. Durch Aktivierung zunächst der dem Gesichtfeld des Fahrzeuginsassen 17 weiter abgewandten Signalquelle 18' wird eine anfangs rasche Ausrichtbewegung des Kopfes 19 bewirkt. Durch Zuschaltung der zweiten Signalquelle 18" oder deren alleinigen Aktivierung wird die Ausrichtbewegung abgefangen und einer Bewegung des Kopfes 19 über die in Fahrtrichtung ausgerichtete Position hinaus entgegengewirkt. Zur Steuerung der zeitlichen Abfolge der Signalquellen 18', 18" kann die Kopfstellung des Fahrzeuginsassen 17 vor dem Emissionszeitpunkt t_{E} über einen beispielsweise am Fahrzeughimmel angeordneten Scanner oder eine Videokamera 21 festgestellt werden.

Neben optischen und akustischen Schrecksignalen umfasst die Erfindung auch taktile Schrecksignale. Dazu gehören unter anderem Bewegungen der Kopfstütze 16, die zu einer Berührung mit dem Fahrzeuginsassen 17 führen, wobei bei geeigneter Ausbildung der Kopfstütze 16 gleichzeitig ein Ausrichten des Kopfes 19 in Fahrtrichtung unterstützt werden kann. Als weiteres taktiles Schrecksignal kann auch eine plötzlich einsetzende Bewegung des Sitzes 14 dienen, beispielsweise in Form einer Vibration oder einer schlagartigen Positionsverstellung, beispielsweise der Rückenlehne 15.

Es besteht auch die Möglichkeit, Schrecksignale zu erzeugen, deren Wirkung auf optischer und/oder akustischer und/oder taktiler Wahrnehmung beruht. Beispielsweise können durch Aktivierung eines Airbags alle drei Sinne auf einmal angesprochen werden, womit eine sehr hohe und wirkungsvolle Reizwirkung erzielt werden kann.

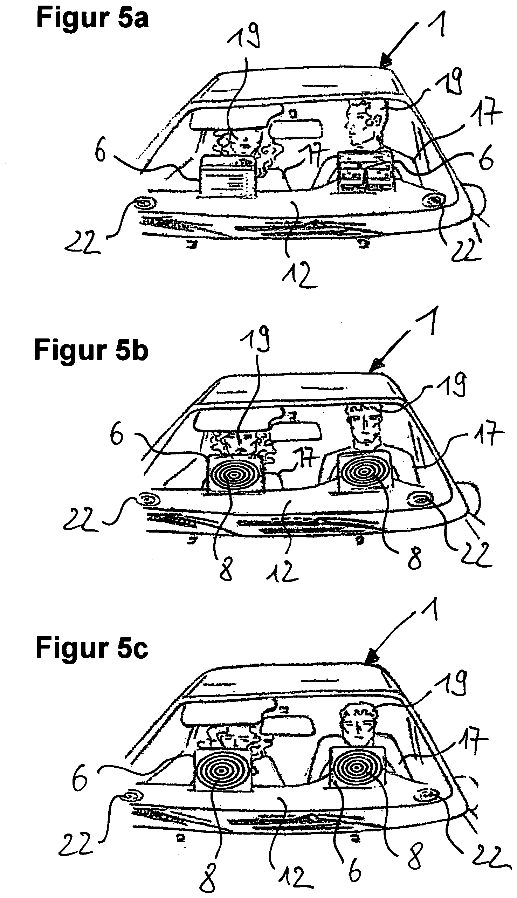

Die Figuren 5a bis 5c zeigen drei Phasen im Zusammenhang mit dem erfindungsgemäßen Verfahren:
Die erste Phase stellt eine Normalsituation eines Fahrzeugs 1 mit Insassen 17 in entspannter Sitzposition dar. Die Köpfe 19 zeigen eine typische, jedoch nicht in der Medianebene des jeweiligen Körpers des Insassen 17 bzw. in Fahrtrichtung liegende Ausrichtung.

In der zweiten Phase wird der Kopf 19 jedes der beiden gezeigten Insassen 17 durch ein erfindungsgemäßes optisches Signal 8 und eine Orientierungsreaktion zumindest annähernd in die Medianebene des Körpers des Insassen 17 bzw. in Fahrtrichtung ausgerichtet. Das optische Signal 8 wird hierzu auf einem Head-up Display 6 ausgegeben.

In der dritten, unmittelbar daran anschließenden Phase erfolgt durch die Ausgabe eines Schrecksignals die Stimulation, das heißt die Anspannung, der Muskulatur im Hals- und Nackenbereich in der Art einer menschlichen Schutzreaktion. In Fig. 5c wird dies dargestellt durch den eingezogenen Kopf 19 bei beiden Insassen 17. Jeder Kopf 19 ist annähernd in der Medianebene des Körpers des Insassen 17 bzw. in Fahrtrichtung ausgerichtet und dadurch bestmöglich durch die eigene Muskelstimulation geschützt.

## Patentansprüche

1. Verfahren zur Vermeidung oder Verringerung des Verletzungsrisikos für die Fahrzeuginsassen (17) bei einem Auffahrunfall mit folgenden Verfahrensschritten:
a) Detektion des bevorstehenden Auffahrunfallereignisses,
b) Ermittlung des voraussichtlichen Aufprallzeitpunktes t_{A},
c) Ermittlung des Emissionszeitpunktes t_{E} oder Emissionszeitfensters für ein auf die Fahrzeuginsassen (17) einwirkendes Schrecksignal,
d) Emission des Schrecksignals zum Emissionszeitpunkt t_{E} oder innerhalb des Emissionszeitfensters zur Erzeugung eines Schreckreflexes bei den Fahrzeuginsassen (17),
e) **dadurch gekennzeichnet, dass** vor Emission des Schrecksignals durch Ausgabe eines zeitlich vorgelagerten optischen Signals (8) als Vorbereitungsmaßnahme der Kopf (19) in Fahrtrichtung ausgerichtet wird.

2. Verfahren nach Anspruch 1, **dadurch gekennzeichnet, dass** vor der Emission des Schrecksignals durch ein statisches oder dynamisches optisches Signal (8) an festgelegter oder rechnerisch bestimmbarer Stelle vor dem Insassen (17) dessen Kopf (19) durch eine Orientierungsreaktion in Fahrtrichtung ausgerichtet wird.

3. Verfahren nach Anspruch 1 oder 2, **dadurch gekennzeichnet, dass** vor der Ausgabe des den Kopf (19) ausrichtenden optischen Signals (8) die Kopf-Schulterstellung von Insassen (17) erfasst und vermessen wird.

4. Verfahren nach Anspruch 3, **dadurch gekennzeichnet, dass** das mit sensorischen oder bildverarbeitungstechnischen Mitteln (21) erlangte Messergebnis als Aktivierungsbedingung und zur Bestimmung von Art, Ausgabeort und Ausgabezeit des optischen Signals (8) herangezogen wird und im Falle einer bereits als günstig ermittelten Kopf-Schulterausrichtung des Insassen (17) oder im Falle einer als sehr ungünstig ermittelten Sitzposition des Insassen das den Kopf (19) ausrichtende optische Signal (8) und das Schrecksignal nicht aktiviert werden.

5. Verfahren nach einem der Ansprüche 1 bis 4, **dadurch gekennzeichnet, dass** während oder bereits vor und während der Ausgabe des den Kopf (19) ausrichtenden optischen Signals (8) die Aufmerksamkeit und/oder die Reaktion von Insassen (17) des Fahrzeugs steigernde optische oder akustische Warnsignale oder Sprachhinweise ausgegeben werden.

6. Verfahren nach einem der Ansprüche 1 bis 5, **dadurch gekennzeichnet, dass** die Ausgabestelle des optischen Signals (8) so festgelegt oder rechnerisch bestimmt wird, dass der Kopf (19) des Insassen (17) in bestimmter Richtung so ausgerichtet wird, dass der Abstand zur Kopfstütze (16) möglichst klein ist.

7. Vorrichtung zur Durchführung eines Verfahrens gemäß einem der Ansprüche 1 bis 6,
- mit einer ersten Sensiereinrichtung zur Erfassung des Abstandes der am Unfall beteiligten Fahrzeuge (1, 5),
- mit einer ersten Signalquelle (18) zur Emission eines auf die Fahrzeuginsassen (17) einwirkenden Schrecksignals,
- mit einer zweiten Signalquelle zur Ausgabe eines dem Schrecksignal zeitlich vorgelagerten optischen Signals (8), um den Kopf (19) eines Fahrzeuginsassen (17) in Fahrtrichtung auszurichten, und
- mit einer Steuereinheit (4) zur Verarbeitung der mit der ersten Sensiereinrichtung gewonnen Daten, um einen bevorstehenden Unfall zu detektieren und die Emission des dem Schrecksignal zeitlich vorgelagerten optischen Signals (8) und die Emission des Schrecksignals zur Erzielung eines Schreckreflexes bei den Fahrzeuginsassen (17) zu steuern.

8. Vorrichtung nach Anspruch 7, **dadurch gekennzeichnet, dass** die Zeitdaten aus dem Datenverarbeitungssystem zur zeitlichen Vorhersage des Auffahrvorgangs und des bevorstehenden rückwärtigen Aufpralls einer Steuereinheit (4) zugeleitet werden, mit welcher der Emissionszeitpunkt t₀ des die Kopfausrichtung bewirkenden optischen Signals (8) errechnet und dessen Emission vorgenommen wird.

## Claims

1. Method for preventing or reducing the risk of injury to vehicle occupants (17) in the event of a rear-end collision, comprising the following method steps:
a) detecting the imminent occurrence of the rear-end collision,
b) determining the estimated impact time t_{A},
c) determining the emission time t_{E} or emission time window for a startle signal that acts on the vehicle occupants (17),
d) emitting the startle signal at the emission time t_{E} or within the emission time window in order to induce a startle reflex in the vehicle occupants (17),
e) **characterised in that** before the startle signal is emitted, the head (19) is aligned in the direction of travel as a preparatory measure by a preceding optical signal (8) being output.

2. Method according to claim 1, **characterised in that** before the startle signal is emitted, the head (19) of the occupant (17) is aligned in the direction of travel by an orientation response by means of a static or dynamic optical signal (8) at a fixed or calculable point in front of said occupant.

3. Method according to either claim 1 or claim 2, **characterised in that** before the optical signal (8) aligning the head (19) is output, the head and shoulder position of the occupants (17) is detected and measured.

4. Method according to claim 3, **characterised in that** the measurement result obtained using sensory or image-processing means (21) is used as an activation condition and for determining the type, output location and output time of the optical signal (8) and, in the case of a head and shoulder alignment of the occupant (17) that has already been determined to be favourable or in the case of a sitting position of the occupant that is determined to be very unfavourable, the optical signal (8) aligning the head (19) and the startle signal are not activated.

5. Method according to any of claims 1 to 4, **characterised in that** during or even before and during output of the optical signal (8) aligning the head (19), optical or acoustic warning signals or voice messages that increase the concentration and/or the response of the occupants (17) of the vehicle are output.

6. Method according to any of claims 1 to 5, **characterised in that** the output point of the optical signal (8) is fixed or calculated such that the head (19) of the occupant (17) is aligned in a certain direction such that the distance from the headrest (16) is as small as possible.

7. Device for carrying out a method according to any of claims 1 to 6,
- comprising a first sensing means for detecting the distance between the vehicles (1, 5) involved in the collision,
- comprising a first signal source (18) for emitting a startle signal that acts on the vehicle occupants (17),
- comprising a second signal source for outputting an optical signal (8) preceding the start signal, in order to align the head (19) of a vehicle occupant (17) in the direction of travel, and
- comprising a control unit (4) for processing the data obtained using the first sensing means in order to detect an imminent collision and to control the emission of the optical signal (8) preceding the startle signal and the emission of the startle signal in order to achieve a startle reflex in the vehicle occupants (17).

8. Device according to claim 7, **characterised in that** the time data from the data processing system for the temporal prediction of the collision and of the imminent rear-end impact are supplied to a control unit (4), by means of which the emission time t₀ of the optical signal (8) aligning the head is calculated and said signal is emitted.

## Revendications

1. Procédé visant à éviter ou à réduire le risque de blessures des occupants (17) d'un véhicule lors d'une collision par l'arrière, incluant les étapes opératoires suivantes :
a) détection de l'occurrence imminente d'une collision par l'arrière,
b) spécification de l'instant prévisible t_{A} de l'impact,
c) spécification de l'instant d'émission t_{E} ou de la fenêtre temporelle d'émission d'un signal de choc émotionnel agissant sur lesdits occupants (17) du véhicule,
d) émission dudit signal de choc émotionnel, audit instant d'émission t_{E} ou dans les limites de ladite fenêtre temporelle d'émission, en vue de faire naître un réflexe de choc émotionnel au sein desdits occupants (17) du véhicule,
e) **caractérisé par le fait que**, préalablement à l'émission du signal de choc émotionnel, la tête (19) est orientée dans la direction du déplacement par délivrance d'un signal optique (8) à prééminence temporelle, en tant que mesure préparatoire.

2. Procédé selon la revendication 1, **caractérisé par le fait que**, préalablement à l'émission du signal de choc émotionnel, sous l'action d'un signal optique (8) statique ou dynamique dans une zone fermement établie ou pouvant être déterminée par des calculs, devant l'occupant (17), la tête (19) de ce dernier est orientée dans la direction du déplacement sous l'effet d'une réaction d'orientation.

3. Procédé selon la revendication 1 ou 2, **caractérisé par le fait que** la position de la tête et des épaules d'occupants (17) est détectée et mesurée préalablement à la délivrance du signal optique (8) orientant ladite tête (19).

4. Procédé selon la revendication 3, **caractérisé par le fait que** le résultat de la mesure, obtenu par des moyens (21) de détection ou de traitement technique d'images, est utilisé en tant que condition d'activation et en vue de déterminer le type, le site de délivrance et la durée de délivrance du signal optique (8) ; et ledit signal optique (8) orientant la tête (19), et le signal de choc émotionnel, ne sont pas activés dans le cas où une orientation de la tête et des épaules de l'occupant (17) a déjà été spécifiée comme propice, ou bien dans le cas où une posture assise dudit occupant a été spécifiée comme très défavorable.

5. Procédé selon l'une des revendications 1 à 4, **caractérisé par le fait que** des signaux d'alerte optiques ou acoustiques, voire des instructions vocales accroissant l'attention et/ou la réaction d'occupants (17) du véhicule, sont délivré(e)s pendant, ou avant même le début et au cours de la délivrance du signal optique (8) orientant la tête (19).

6. Procédé selon l'une des revendications 1 à 5, **caractérisé par le fait que** la zone de délivrance du signal optique (8) est fermement établie, ou déterminée par des calculs, de façon telle que la tête (19) de l'occupant (17) soit orientée, dans une direction déterminée, afin que la distance par rapport à l'appui-tête (16) soit la plus faible possible.

7. Dispositif dévolu à la mise en oeuvre d'un procédé conforme à l'une des revendications 1 à 6, comprenant
- un premier appareil capteur, réalisé pour détecter l'espacement des véhicules (1, 5) impliqués dans l'accident,
- une première source de signaux (18), dédiée à l'émission d'un signal de choc émotionnel agissant sur lesdits occupants (17) du véhicule,
- une seconde source de signaux, affectée à la délivrance d'un signal optique (8) à prééminence temporelle par rapport audit signal de choc émotionnel, en vue d'orienter la tête (19) d'un occupant (17) du véhicule dans la direction du déplacement, et
- une unité de commande (4) destinée au traitement des données acquises à l'aide dudit premier appareil capteur, de manière à détecter l'imminence d'un accident et à commander l'émission dudit signal optique (8) à prééminence temporelle par rapport audit signal de choc émotionnel, et l'émission dudit signal de choc émotionnel afin d'obtenir un réflexe de choc émotionnel au sein desdits occupants (17) du véhicule.

8. Dispositif selon la revendication 7, **caractérisé par le fait que** les données temporelles émanant du système de traitement de données sont dirigées, en vue du pronostic temporel de l'occurrence d'une collision par l'arrière et de l'imminence de l'impact par l'arrière, vers une unité de commande (4) par laquelle l'instant d'émission t_{O} du signal optique (8) provoquant l'orientation de la tête est calculé, et l'émission de ce dernier est effectuée.
